# EUROPEAN PATENT APPLICATION

(11) **EP 1 233 223 A2**
(43) Date of publication of application: **21.08.2002**
(21) Application number: 02003063.1
(22) Date of filing: 12.02.2002
(51) Int. Cl.: F16L 11/11

(54) **Pipe with bellow**

(30) Priority: 13.02.2001 IT TO010123
(71) Applicant: OFFICINE METALLURGICHE G. CORNAGLIA S.p.A., 10092 Beinasco (IT)
(72) Inventor: Cornaglia, Umberto, 10027 Testona (IT); Marcon, Ermes, 10024 Moncalieri (IT)
(74) Representative: Plebani, Rinaldo

(57) **Abstract**

A pipe (1) for pressurized fluid, in particular an automotive intercooler pipe, having at least one flexible portion (2) in the form of a bellows sleeve (3) formed in one piece with and of the same material as the rest of the pipe; a number of radial undulations (4) of the sleeve project with respect to an outer lateral surface (5) of the pipe, and are so shaped as to always project with respect to the outer lateral surface of the pipe at any angular portion of the flexible portion; and at least some of the undulations have at least two shallow angular portions (6), which still project with respect to the outer lateral surface of the pipe, and which are all aligned to form two shallow longitudinal portions (7) axially reinforcing the sleeve.

## Description

The present invention relates to a controlled-axial-rigidity pipe for pressurized fluid, comprising at least one flexible portion in the form of a bellows sleeve formed in one piece with the rest of the pipe. The invention may be used to particular advantage, though not exclusively, in pressurized air circuits, particularly as part of the air intake system of a turbosupercharged internal combustion engine with an intercooler.

Bellows sleeves have long been used on pipes in general and on engine intake pipes (or exhaust pipes, in the case of metal piping), and provide, on the one hand, for forming complex pipelines in confined spaces, capable of adapting to the assembly tolerances of the connected parts and any movement "induced" by in-service stress, and, on the other, for reducing the transmission of vibration between the connected parts, thus reducing noise. In the case of synthetic plastic pipes, such as those typically used in automotive air intake systems, modern molding methods enable bellows sleeves to be formed in one piece with straight portions of the pipe, thus simplifying assembly and reducing manufacturing cost.

In the case of air intake pipes made of synthetic plastic material, however, the bellows sleeve portions of the pipe undergo severe in-service strain, mainly due to the pressure of the fluid flowing along the pipe. In use, turbosupercharger-intercooler connecting pipes, in particular, undergo repeated fluctuations in pressure, normally accompanied by severe thermal stress and which result in fatigue of the bellows material and, consequently, in possible failure or, at any rate, reduced working life of the pipe.

The above problems are further compounded by internal and external stress resulting in axial stretch of the bellows, which, though not always undesirable, must not be allowed to exceed given limits.

To eliminate the above drawbacks, bellows sleeves are not normally used on internal combustion engine air intake pipes to connect straight pipe portions made of rigid material resistant to internal pressure. Instead, sleeves made of special rubber are employed, but which must be either applied and clamped - a complex, expensive, unreliable solution - or co-molded using a very expensive manufacturing technique.

It is an object of the present invention to provide a pipe comprising a bellows sleeve formed in one piece with and of the same material as the rest of the pipe, so as to solve the production and assembly problems referred to above, but which at the same time has none of the aforementioned drawbacks typically associated with molded synthetic plastic bellows sleeves : in particular, a pipe which is relatively cheap, reliable, easy to produce, and compact.

It is a further object of the invention to provide a pipe wherein the axial rigidity of the flexible portions can be controlled to design specifications.

According to the present invention, there is provided a pipe for pressurized fluid, comprising at least one flexible portion in the form of a bellows sleeve formed in one piece with and of the same material as the rest of the pipe; said bellows sleeve comprising a number of radial undulations projecting with respect to an outer lateral surface of said pipe; characterized in that said undulations are so shaped as to always project with respect to said outer lateral surface of the pipe at any angular portion of said flexible portion; and in that, in combination, at least some of said undulations have at least two shallow angular portions, but which still project with respect to said outer lateral surface.

Preferably, in the pipe according to the present invention, the corresponding shallow angular portions of all the undulations are substantially aligned lengthwise of said pipe to define respective shallow longitudinal portions reinforcing said bellows sleeve.

The resulting pipe therefore comprises at least one bellows sleeve enabling the pipe to be bent and used easily; the bellows sleeve can be produced easily and cheaply; and, last but not least, axial deformation of the bellows sleeves of a pipe in accordance with the invention can be controlled at the design stage simply by appropriate sizing, and in particular by selecting an appropriate height of the shallow angular portions of the undulations. The smaller the height, i.e. the shallower the angular portions of the undulations are, the greater the axial rigidity of the bellows sleeve will be.

Two non-limiting embodiments of the present invention will be described by way of example with reference to the accompanying drawings, in which:
Figure 1 shows a side view of a detail of a first embodiment of the pipe according to the present invention;
Figure 2 shows a section along line II-II in Figure 1;
Figure 3 shows a section, with parts removed for clarity, along line III-III in Figure 2;
Figure 4 shows the same section as in Figure 2, of a second embodiment of the pipe according to the invention.

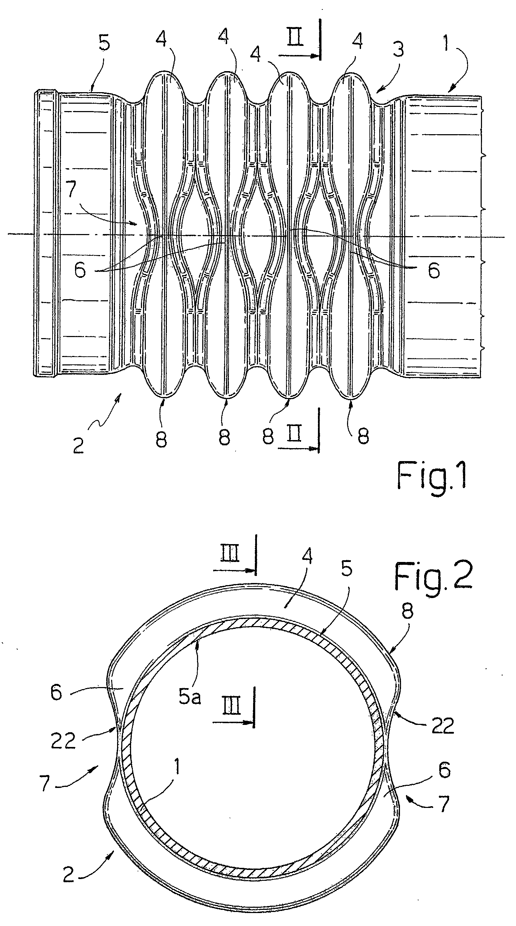

Figures 1 and 2 show part of a pressurized-fluid pipe 1 comprising a flexible portion 2 in the form of a bellows sleeve 3 formed in one piece with and of the same material as the rest of pipe 1. Sleeve 3 comprises a number of radial undulations 4 which always project with respect to an outer lateral surface 5 of pipe 1.

More specifically, in a transverse, radial cross section of pipe 1 (Figure 2), undulations 4 have a substantially circular profile, and are so shaped as to always project with respect to the substantially cylindrical lateral surface 5 at any angular portion of sleeve 3.

According to the invention, at least some of undulations 4 have two shallow, diametrically opposite, angular portions 6, which nevertheless still project with respect to lateral surface 5. In the preferred, non-limiting embodiment shown, each undulation 4 has two shallow angular portions 6; and the corresponding shallow angular portions 6 of all the undulations 4 are substantially aligned lengthwise of pipe 1 to define two shallow longitudinal portions 7 reinforcing sleeve 3 and located diametrically opposite each other, i.e. 180° apart.

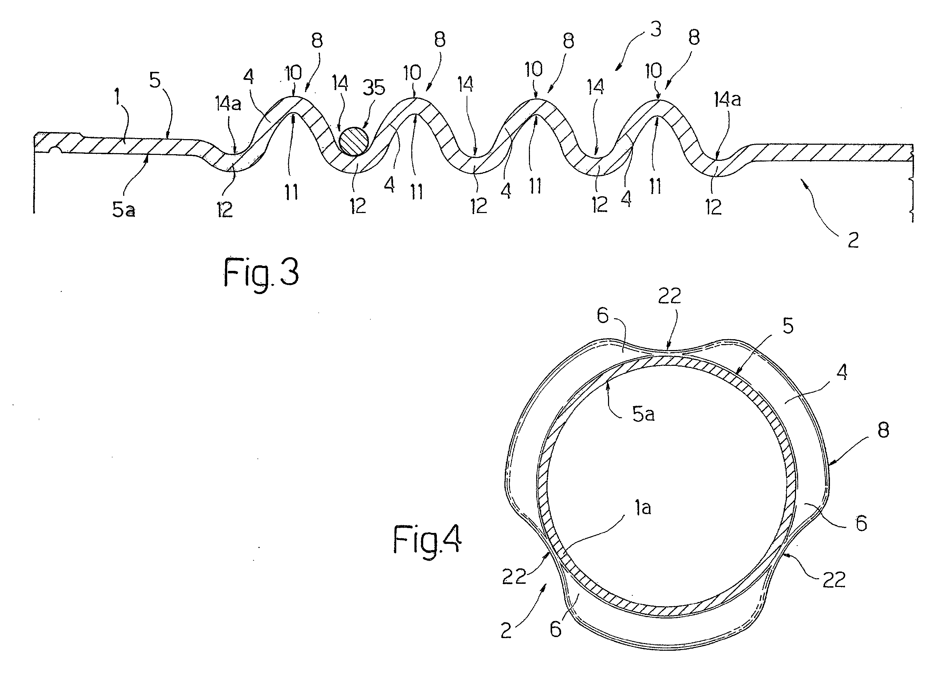

According to a further characteristic of the invention shown clearly in Figure 3, in radial section and along a longitudinal diametrical plane of pipe 1 coincident with the Figure 3 plane, undulations 4 are substantially cusp-shaped, at least at respective crests 8, which are defined, in radial section, by semicircular extrados portions 10, and by pointed-arch-shaped intrados portions 11. Tests have shown, and subsequent finite elements mathematical analysis confirmed, that, with the above radial section, undulations 4 provide for better withstanding severe in-service stress.

According to the invention, the radial section of bellows sleeve 3 is completed by undulations 4 (Figure 3) being connected to one another and to the rest of pipe 1 by respective annular wall portions 12 having a circular radial section and respective concavities 14 facing radially outwards of pipe 1. Wall portions 12 extend radially beyond lateral surface 5 and towards the axis of and inside pipe 1, i.e. beyond a substantially cylindrical inner lateral surface 5a of pipe 1.

A further characteristic of the invention is the shape of shallow angular portions 6 of undulations 4, which are defined by respective saddle-shaped dips 22 (Figure 2) having a circular radial section with a wide radius of curvature, i.e. much wider than that of the section of undulations 4. Moreover, at shallow angular portions 6, undulations 4 get gradually narrower, i.e. in the direction of the axis of pipe 1 (Figure 1), and then widen out to their original size in sinusoidal curves to assume, when viewed from above (i.e. parallel to the Figure 1 plane) a substantially "hourglass" shape.

Along shallow longitudinal portions 7 of flexible portion 2, therefore, undulations 4 are reinforced not only by being reduced in height - i.e. by respective crests 8 being closer to lateral surface 5 at dips 22 - but also by being transversely smaller. And by virtue, in the preferred, non-limiting embodiment shown, of shallow portions 6 of all the undulations 4 being aligned into two shallow longitudinal portions 7, the above reinforcement of each undulation 4 produces a predetermined axial and circumferential reinforcement of flexible portion 2, which, with no noticeable alteration in the flexibility of portion 2, except in the plane through portions 7, increases the resistance, in particular the fatigue resistance, of portion 2 to in-service thermal and mechanical stress.

Since tests have shown the axial rigidity of bellows sleeve 3 to be largely proportional to the height of shallow portions 6, the axial rigidity of flexible portion 2 of pipe 1 according to the invention can be easily controlled by simply selecting an appropriate height of shallow portions 6, to obtain more or less axially rigid pipes 1, depending on service requirements.

The technical advantage described may, obviously, also be achieved, to a different extent, even without aligning shallow portions 6 into straight portions 7. More specifically, in alternative embodiments not shown for the sake of simplicity, portions 6 of adjacent undulations 4 may be angularly offset either alternately (to define zigzag, as opposed to straight, shallow portions 7) or gradually (to define helical shallow portions 7). Moreover, the height and width (measured lengthwise of pipe 1) of shallow portions 6 of each undulation 4 may differ from those of the corresponding portions 6 of the adjacent undulations 4; and undulations 4 may differ in size and alternate, regularly or not, with undulations with no shallow portions 6. Finally, the difference in size between one undulation 4 and another may be axially symmetrical. For example, the higher undulations 4 (or those with the least shallow angular portions 6) may be located at the center of sleeve 3 - which will therefore be axially "barrel-shaped", at least in the plane in which shallow portions 6 are aligned - or at the ends of sleeve 3, which, axially, will therefore be "hourglass-shaped".

As will be clear from the foregoing description, each undulation 4 of the pipe according to the present invention may, obviously, comprise more than two shallow angular portions 6. For example, Figure 4 shows a cross section of a pipe 1a, in which each undulation 4 comprises three shallow portions 6 equally spaced 120° apart and forming, in the corresponding bellows sleeve 3, three shallow longitudinal portions 7 which all contribute towards the axial rigidity of flexible portion 2.

Figure 3 also shows a further variation of pipe 1 according to the invention, and which provides for partial radial reinforcement of bellows sleeve 3, without altering its flexibility or producing any stress concentration in use.

That is, pipe 1 comprises at least one known, preferably circular-section retaining ring 35 inserted inside a concavity 14 between two adjacent undulations 4, or a number of retaining rings 35 inserted inside respective concavities 14 between adjacent undulations 4. According to the'invention, therefore, it is understood that respective concavities 14a connecting flexible portion 2 to the rest of pipe 1 should have no retaining rings 35. The "binding" effect of retaining ring/s 35, in fact, has surprisingly been found to be much less effective when applied to concavities 14a.

As stated, Figures 1, 2 and 3 show, for the sake of simplicity, only a limited portion of pipe 1, which, according to the invention, may comprise as many flexible portions 2 as required to form a pipe 1 of any complex shape. In which case, the shallow axial reinforcing portions 7 of bellows sleeve 3 defining each flexible portion 2 are offset angularly with respect to portions 7 of bellows sleeves 3 defining the other flexible portions 2.

## Claims

1. A pipe for pressurized fluid, comprising at least one flexible portion in the form of a bellows sleeve formed in one piece with and of the same material as the rest of the pipe; said bellows sleeve comprising a number of radial undulations projecting with respect to an outer lateral surface of said pipe; **characterized in that** said undulations are so shaped as to always project with respect to said outer lateral surface of the pipe at any angular portion of said flexible portion; and **in that**, in combination, at least some of said undulations have at least two shallow angular portions, but which still project with respect to said outer lateral surface.

2. A pipe as claimed in Claim 1, **characterized in that** said shallow angular portions are substantially aligned lengthwise of said pipe to define respective shallow longitudinal portions reinforcing said bellows sleeve.

3. A pipe as claimed in Claim 1 or 2, **characterized in that** said shallow angular portions are substantially saddle-shaped.

4. A pipe as claimed in Claim 3, **characterized in that**, at said shallow angular portions, said undulations get gradually narrower and then widen out to their original size.

5. A pipe as claimed in any one of the foregoing Claims, **characterized in that** each said undulation comprises more than two said shallow angular portions.

6. A pipe as claimed in Claim 5, **characterized in that** said shallow angular portions are equally spaced angularly.

7. A pipe as claimed in any one of the foregoing Claims, **characterized in that**, in radial section and in a longitudinal diametrical plane of said pipe, said undulations are substantially cusp-shaped, at least at respective crests of the undulations.

8. A pipe as claimed in Claim 7, **characterized in that**, in radial section, said crests of said undulations have respective semicircular outer (extrados) profiles, and respective pointed-arch-shaped inner (intrados) profiles.

9. A pipe as claimed in any one of Claims 2 to 8, **characterized by** comprising at least two said flexible portions.

10. A pipe as claimed in Claim 9, **characterized in that** said shallow longitudinal portions of the bellows sleeve defining each said flexible portion are offset angularly with respect to the corresponding shallow longitudinal portions of the bellows sleeve defining each other said flexible portion.

11. A pipe as claimed in any one of the foregoing Claims, **characterized by** comprising a retaining ring inserted in at least one concavity between two adjacent said undulations.
